# EUROPEAN PATENT SPECIFICATION

(11) **EP 2 725 680 B1**
(45) Date of publication and mention of the grant of the patent: **18.01.2017**
(21) Application number: 13152146.0
(22) Date of filing: 22.01.2013
(51) Int. Cl.: H02J 7/00

(54) **Electronic device and power supplying control method thereof**
Elektronische Vorrichtung und Leistungszufuhrsteuerungsverfahren davon
Dispositif électronique et son procédé de commande d'alimentation électrique

(30) Priority: 25.10.2012 TW 101139562
(43) Date of publication of application: 30.04.2014
(73) Proprietor: Acer Incorporated, New Taipei City 221 (TW)
(72) Inventor: Li, Po-Yu, 221 New Taipei City (TW); Juan, Kuan-Chi, 221 New Taipei City (TW); Chou, Sun-Ho, 221 New Taipei City (TW); Weng, Sheng-Yu, 221 New Taipei City (TW); Chang, Yu-Sheng, 221 New Taipei City (TW)
(74) Representative: Becker Kurig Straus

(56) References cited:
- US-A1- 2011 074 360
- US-A1- 2011 167 281

## Description

### BACKGROUND

### Technical Field

The invention relates to an electronic device. Particularly, the invention relates to an electronic device and a power supplying control method thereof.

### Related Art

Along with development of technology, handheld electronic devices such as smart phones, tablet personal computers (PCs) or notebook computers, etc. are all developed to have a thin and slim appearance. In this case, the size and capacity of a battery in the handheld electronic device are all limited. Inbuilt batteries of some handheld electronic devices cannot be disassembled under an overall design consideration, such that power management thereof and a method of seeking alternative power become a great challenge.

In application of a notebook computer, there is a technique of replacing a space of a compact disc (CD) drive of the notebook computer by a second battery. In this case, a main system can connect and communicate with the second battery through a system management bus (SMBus), etc., by which besides power is transported, data such as temperature, quantity of electricity and clock are also obtained. However, extensibility of such practice is not large, and a main body of the notebook computer must have a specific specification for usage. Under the design consideration of light and slim, the inbuilt CD drives of a part of the notebook computer products have already been removed, in this case, none space is available for the second battery.

On the other hand, a method of using an external mobile power supply is widely used. However, when such method is used, the system of a mobile electronic device cannot detect a current remaining power and other information of the mobile power supply. In this case, the operating system of the mobile electronic device probably cannot preserve enough power to enter a hibernation mode before the power of the main body and the power of the mobile power supply are used out, which may cause data loss or system damage. Therefore, it is one of urgent problems required to be resolved to manage usage status and configuration between the battery of the main body and the mobile power supply.

US 2011/074360 A1 discloses an adapter including an associated battery capable of powering an electronic device. The power adapter typically includes the battery as an integral component that is connected to a plug or other interface capable of mating with a power source, such as a wall socket. Thus, the adapter battery may provide power either to operate the device or charge a battery within (or otherwise associated with) the device even if the adapter is not connected to a power source.

US 2011/167281 A1 discloses methods, apparatus, and circuits for managing power among portable computing devices and one or more accessories. Provided are commands to improve power management between a portable computing device and one or more accessories; commands that may allow a portable computing device to charge at a maximum available current level while providing an accessory with sufficient current for its proper operation; and preventing a portable computing device from drawing a high level of current that could be detrimental to an accessory, while others provide commands that may allow a battery pack to instruct a portable computing device to not charge its internal battery.

### SUMMARY

The invention is provided by appended claims 1 and 10. Preferably, the present invention is directed to an electronic device and a power supplying control method, which is capable of automatically detecting whether to receive an external power supplying source, and effectively manage an internal power supply and an external power supply.

The invention provides an electronic device including a system unit, an internal power supplying unit and a power controller. The internal power supplying unit is coupled to the system unit, and supplies a system voltage to the system unit. The power controller is coupled to the system unit and the internal power supplying unit, receives an external voltage from external of the electronic device, and determines a source of the external voltage using a voltage value of the external voltage.
When the power controller determines that the source of the external voltage is a mobile power supply device, the power controller provides the external voltage to the system unit, and does not charge the internal power supplying unit with the external voltage. The voltage value of the external voltage provided by the mobile power supply device is higher than a voltage value of the system voltage.

The invention provides a power supplying control method, which is adapted to an electronic device, where the electronic device includes an internal power supplying unit and a system unit, where the internal power supplying unit supplies a system voltage to the system unit, and the method includes following steps. First, an external voltage is received from external of the electronic device. Then, a source of the external voltage is determined according to a voltage value of the external voltage. When the source of the external voltage is a mobile power supply device, the external voltage is supplied to the system unit, and the external voltage is not used to charge the internal power supplying unit, where the voltage value of the external voltage provided by the mobile power supply device is higher than a voltage value of the system voltage.

According to the above descriptions, the invention provides the electronic device and the power supplying control method thereof, which is capable of detecting a source type of the external voltage, and performing different power management according to different source types of the external voltage.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a functional block diagram of an electronic device according to an embodiment of the invention.
FIG. 2 is a flowchart illustrating a power supplying control method according to an embodiment of the invention.
FIG. 3 is a flowchart illustrating a power supplying control method according to an embodiment of the invention
FIG. 4 is a circuit diagram of an electronic device according to an embodiment of the invention.

### DETAILED DESCRIPTION OF DISCLOSED EMBODIMENTS

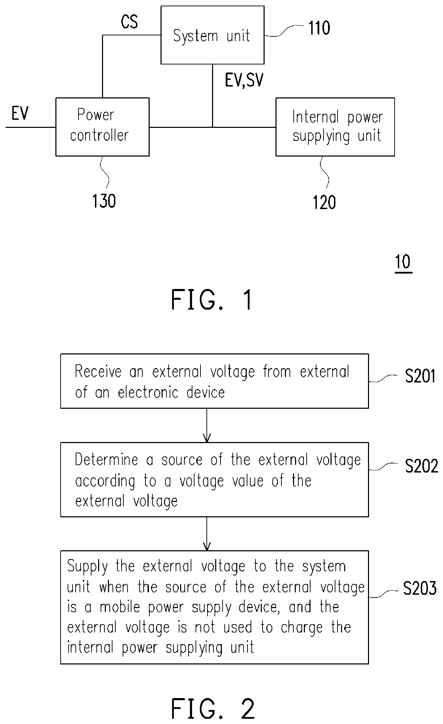

FIG. 1 is a functional block diagram of an electronic device according to an embodiment of the invention. Referring to FIG. 1, the electronic device 10 includes a system unit 110, an internal power supplying unit 120 and a power controller 130. The internal power supplying unit 120 is coupled to the system unit 110, and supplies a system voltage SV to the system unit 110. The power controller 130 is coupled to the system unit 110 and the internal power supplying unit 120, receives an external voltage EV from external of the electronic device 10, and determines a source of the external voltage EV according to a voltage value of the external voltage EV. When the power controller 130 determines that the source of the external voltage EV is a mobile power supply device, the power controller 130 provides the external voltage EV to the system unit 110, and does not charge the internal power supplying unit 120 with the external voltage EV. The voltage value of the external voltage EV provided by the mobile power supply device is higher than a voltage value of the system voltage SV.

FIG. 2 is a flowchart illustrating a power supplying control method according to an embodiment of the invention. The above method is adapted to an electronic device, where the electronic device includes an internal power supplying unit and a system unit. Moreover, the internal power supplying unit supplies a system voltage to the system unit. Referring to FIG.2, first, in step S201, an external voltage is received from external of the electronic device. Then, in step S202, a source of the external voltage is determined according to a voltage value of the external voltage. In step S203, when the source of the external voltage is a mobile power supply device, the external voltage is supplied to the system unit, and the external voltage is not used to charge the internal power supplying unit, where the voltage value of the external voltage provided by the mobile power supply device is higher than a voltage value of the system voltage.

Referring to FIG. 1, in the present invention, the electronic device 10 is a mobile electronic device, for example, a notebook computer. The system unit 110 includes all component units requiring a power supply, for example, a processor, a memory unit, and an input output unit, etc., which is not limited by the invention. Generally, the internal power supplying unit 120 is a battery, and in case of none external power supply source, the electronic device 10 operates according to the system voltage SV provided by the internal power supplying unit 120.

When the system unit 110 detects that a remaining power of the internal power supplying unit 120 is lower than a power threshold, the system unit 110 switches an operating system operated by the system unit 110 to a hibernation mode by using the remaining power of the internal power supplying unit 120, such that data damage or system damage of the operating system due to sudden power-off is avoided.

In the present embodiment, for example, a mobile power supply device such as a mobile power supply, etc. is connected to the power controller 130 through a direct current (DC) jack on the electronic device 10, which is the same to the jack connected to a terminal of an alternating current (AC) transformer. Since the system unit 110 and the internal power supplying unit 120 are generally connected through a system management bus (SMBus), the system unit 110 can accurately grasp the power of the internal power supplying unit 120 according to various monitoring information besides the system voltage EV that is transmitted through the SMBus, and can switch the operating system to the hibernation mode in case of enough remaining power. In an embodiment that the electronic device 10 is a notebook computer, the DC jack does not have other information exchanging function as that of the SMBus, but only has a power input function.

In this way, the voltage value of the external voltage becomes a most easily obtained reference value when determining a type and a power of the external voltage. In an embodiment of the invention, in case that the electronic device 10 is a notebook computer, the mobile power supply device (or a mobile power supply) and the terminal of the AC transformer share the same DC jack, and in the present embodiment, it is set that a voltage value output by the mobile power supply device has to be different to a voltage value output by the AC transformer for distinction. Since a size and power storage capacity of the mobile power supply device are limited, and the AC transformer is connected to a general commercial power, which is a stable and discontinuous power source, it is set that a voltage value of the voltage output by the mobile power supply device is lower than a voltage value of the voltage output by the AC transformer in this embodiment.

In an embodiment of the invention, it is set that the voltage value of the external voltage EV output by the mobile power supply device has to be higher than the voltage value of the system voltage SV provided by the internal power supplying unit 120, which is described later.

Moreover, it should be noticed that in the conventional technique, when the power controller 130 is connected to the AC transformer, besides that the power controller 130 supplies the external voltage EV provided by the AC transformer to the system unit 110, the external voltage is further used to charge the internal power supplying unit 120. However, since the size and the power storage capacity of the mobile power supply device are limited due to portability, etc., in case that the electronic device 10 is the notebook computer, if a mobile power supply device capable of charging the internal power supplying unit 120 of the electronic device 10 is configured, a size thereof is probably close to the size of the notebook computer, which is not applicable.

Therefore, in an embodiment of the invention, when the power controller 130 determines that a source of the external voltage EV is the mobile power supply device, the power controller 130 directly supplies the external voltage EV to the system unit 110 without charging the internal power supplying unit 120.

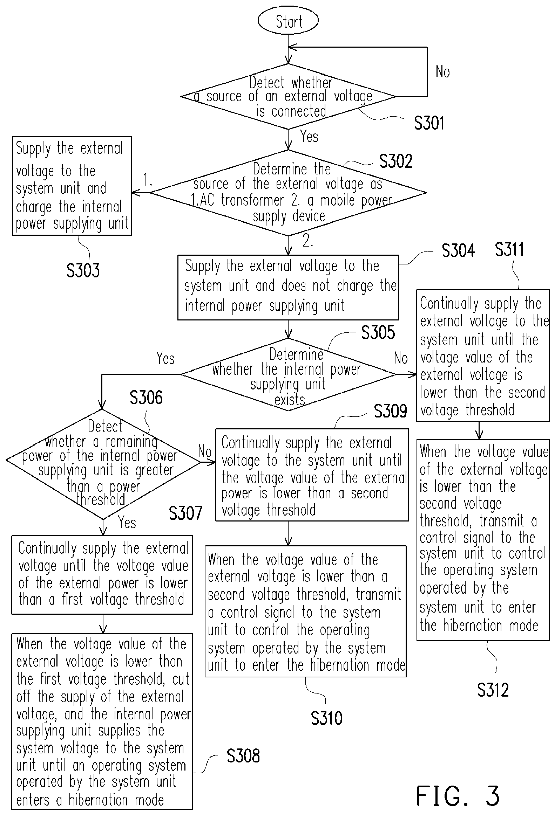

FIG. 3 is a flowchart illustrating a power supplying control method according to an embodiment of the invention, which provides a more detailed implementation compared with that of the embodiment of FIG. 2. Referring to FIG. 1 and FIG. 3, first, the power controller 130 first detects whether a source of the external voltage EV is currently connected, the external voltage EV is received (step S301). When the power controller 130 determines that the source of the external voltage EV is currently connected, the power controller 130 determines whether the source of the currently connected external voltage EV is the AC transformer or the mobile power supply device according to a voltage value of the external voltage EV (step S302).

When the power controller 130 determines that the source of the currently connected external voltage EV is the AC transformer, the power controller 130 supplies the external voltage EV to the system unit 110, and simultaneously charges the internal power supplying unit 120 by using the external voltage EV (step S303).

When the power controller 130 determines that the source of the currently connected external voltage EV is the mobile power supply device, the power controller 130 supplies the external voltage EV to the system unit 110 without charging the internal power supplying unit 120 (step S304).

In some cases, the user may remove the battery (i.e. the internal power supplying unit 120) of the electronic device 10 when the source of the external voltage is connected. Therefore, when the power controller 130 determines that the source of the currently connected external voltage EV is the mobile power supply device, the power controller 130 simultaneously determines whether the internal power supplying unit 120 exists (step S305).

When the power controller 130 determines whether the internal power supplying unit 120 exists, the power controller 130 further determines whether a remaining power of the internal power supplying unit 120 is greater than a power threshold (step S306). When the power controller 130 determines that the remaining power of the internal power supplying unit 120 is still greater than the power threshold, the power controller 130 continually supplies the external voltage EV to the system unit 110 until the voltage value of the external voltage is lower than a first voltage threshold (step S307).

Here, the power threshold corresponds to a power that is enough for the internal power supplying unit 120 switching an operating system operated by the system unit 110 to a hibernation mode, and the first voltage threshold corresponds to a minimum power of the external voltage provided by the mobile power supply device. In the present embodiment, since the power controller 130 and the mobile power supply device are connected through the DC jack, the power controller 130 can only determine the remaining power in the mobile power supply device through a voltage variation of the external voltage.

Namely, when the internal power supplying unit 120 still has enough power for switching the operating system operated by the system unit 110 to the hibernation mode, the power controller 130 can supply the external voltage until the power of the mobile power supply device is exhausted. When the power of the mobile power supply device is exhausted, the power controller 130 switches the internal power supplying unit 120 to supply the system voltage SV to the system unit 110 until the remaining power of the internal power supplying unit 120 is lower than the power threshold. When the system unit 110 detects that the remaining power of the internal power supplying unit 120 is lower than the power threshold, the remaining power of the internal power supplying unit 120 is used for the operating system operated by the system unit to automatically enter the hibernation mode (step S308).

When the remaining power of the internal power supplying unit 120 is not enough for switching the operating system operated by the system unit 110 to the hibernation mode, it represents that the power controller 130 cannot use out all of the power in the mobile power supply device, and can only supply the voltage of the external voltage EV until the voltage value of the external voltage EV is lower than a second voltage threshold (step S309). The second voltage threshold is higher than the first voltage threshold, and a voltage value thereof corresponds to the minimum power of the mobile power supply device capable of switching the operating system operated by the system unit 110 to the hibernation mode. When the voltage value of the external voltage EV is lower than the second voltage threshold, the power controller 130 actively transmits a control signal CS to the system unit 110 to control the operating system operated by the system unit 110 to enter the hibernation mode, so as to avoid file damage or system damage due to sudden power-off caused by power exhaustion (step S310).

It should be noticed that since the method of determining a power magnitude of the mobile power supply device according to the voltage value of the external voltage EV is not as accurate as the system unit 110 detects the internal power supplying unit 120, the second voltage threshold has to be accordingly adjusted due to the above error.

On the other hand, after the power controller 130 determines that the source of the currently connected external voltage EV is the mobile power supply device, and the power controller 130 determines that the internal power supplying unit 120 has been removed (step S305), the mobile power supply device has to reserve enough power for switching the operating system operated by the system unit 110 to the hibernation mode, which is same the situation as described in steps S309-S310,. Therefore, the power controller 130 continually supplies the external voltage EV to the system unit 110 until the voltage value of the external voltage EV is lower than the second voltage threshold (step S311). When the voltage value of the external voltage EV is lower than the second voltage threshold, the power controller 130 actively transmits a control signal CS to the system unit 110 to control the operating system operated by the system unit 110 to enter the hibernation mode, so as to avoid the file damage or the system damage caused by sudden power-off (step S312).

According to the steps of the embodiment of FIG. 3, in case that the file damage or the system damage is avoided, the electronic device 10 can recognize a source type of the external voltage according to the voltage value of the external voltage, and make a full used of the external voltage EV provided from external of the electronic device 10 and the system voltage SV provided by the internal power supplying unit through a voltage variation of the external voltage.

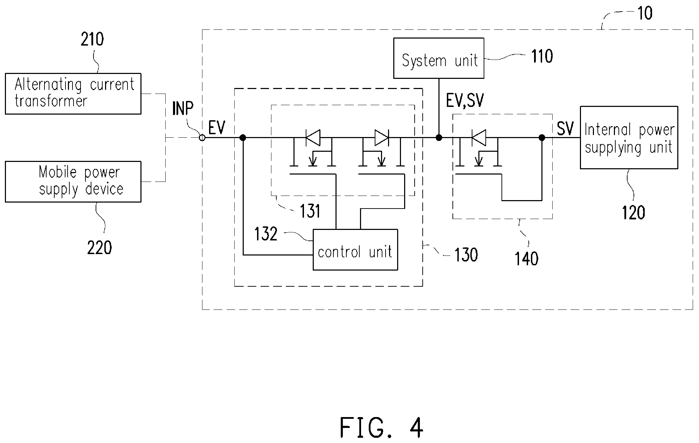

FIG. 4 is a circuit diagram of an electronic device according to an embodiment of the invention. Compared to FIG. 1, the embodiment of FIG. 4 provides a detailed implementation of the power controller 130, and a switch 140 is further configured between the internal power supplying unit 120 and the power controller 130 and the system unit 110. For simplicity's sake, a transmission path that the power controller 130 transmits the control signal CS to the system unit 110 is omitted in FIG. 4. Referring to FIG. 4, the power controller 130 includes a switch 131 and a control unit 132.

In the present embodiment, the switch 131 is coupled between an input point INP and the system unit 110 and the internal power supplying unit 120, where the input point INP is used to connect the source of the external voltage EV (for example, an AC transformer 210 and the mobile power supply device 220). The control unit 132 is coupled to a control terminal of the switch 131 and the input point INP. When the control unit 132 detects that the input point INP is connected to the source of the external voltage EV, i.e. detects the external voltage EV, the control unit 132 turns on the switch 131.

The switch 131 includes two transistors, and parasitic diodes of the two transistors are inversed to each other. The switch 140 includes one transistor, and a control terminal thereof is coupled to the internal power supplying unit 120. Namely, when the internal power supplying unit 120 supplies the system voltage SV to the system unit 110, the switch 140 is turned on. Such configuration of the switches 131 and 140 may avoid disconnection caused by potential imbalance. Since such connection is widely used in the conventional technique, it is well known by those skilled in the art.

Generally, the voltage value of the external voltage EV provided by the AC transformer 210 is higher than the voltage value of the system voltage SV provided by the internal power supplying unit 120. The voltage value of the external voltage EV provided by the mobile power supply device 220 also has to be larger than the voltage value of the system voltage SV provided by the internal power supplying unit 120. Namely, the voltage value of the external voltage EV provided by the mobile power supply device 220 has to be between the voltage value of the external voltage EV provided by the AC transformer 210 and the voltage value of the system voltage SV provided by the internal power supplying unit 120.

Otherwise, when the voltage value of the external voltage EV is lower than the voltage value of the system voltage SV, and the mobile power supply device 220 is connected to the input point INP, a potential between the switches 131 and 140 is lower than a potential between the switch 140 and the internal power supplying unit 120, such that the parasitic diode in the switch 140 is not completely blocked (turn on), and a current is generated to flow back to the mobile power supply device 220, which may cause the mobile power supply device 220 to activate an over current protection (OCP) mechanism to cut off the path between the mobile power supply device 220 and the input point INP.

A following table 1 is a relationship table of numbers of battery cells between the internal power supplying unit 120 and the mobile power supply device 220.

**Table 1**

| | Number of battery cells | | |
|---|---|---|---|
| Internal power supplying unit | 1 | 2 | 3 |
| Mobile power supply device | 2 | 3 | 4 |

Where, a relationship of the numbers of the battery cells between the internal power supplying unit 120 and the mobile power supply device 220 is not limited as that shown in the table 1. Since one battery cell of the notebook computer can provide a voltage of 3 volts, which is decreased to about 2.8V when the power is nearly exhausted, it may have at least one battery cell difference between the internal power supplying unit 120 and the mobile power supply device 220 (for example, the mobile power supply device can also be configured with 4 battery cells, and the internal power supplying unit is configured with 2 battery cells).

In summary, the invention provides an electronic device and a power supplying method thereof, which is capable of determining the source type of the external voltage according to the voltage value of the external voltage, and implement different management methods according to the source type of the external voltage. When the external voltage is the mobile power supply device (or refers to as mobile power supply), the electronic device can determine a maximum usage amount of the power in mobile power supply device according to a magnitude of the remaining power of the internal power supplying unit or whether the internal power supplying unit exists, so as to avoid data damage or system damage of the operating system of the electronic device caused by insufficient power.

## Claims

1. An electronic device (10), comprising:
a system unit (110);
an internal power supplying unit (120), coupled to the system unit (110), and supplying a system voltage (SV) to the system unit (110); and
a power controller (130), coupled to the system unit (110) and the internal power supplying unit (120), receiving an external voltage (EV) from external of the electronic device (10), the electronic device (10) being **characterized in that** the power controller (130) is using a voltage value of the external voltage (EV) to determine a source of the external voltage (EV),
wherein when the power controller (130) determines that the source of the external voltage (EV) is a mobile power supply device, the power controller (130) supplies the external voltage (EV) to the system unit (110), and does not charge the internal power supplying unit (120) with the external voltage (EV).

2. The electronic device (10) as claimed in claim 1, wherein:
when the power controller (130) determines that the source of the external voltage (EV) is an alternating current (AC) transformer, the power controller (130) supplies the external voltage (EV) to the system unit (110), and charges the internal power supplying unit (120) by using the external voltage (EV).

3. The electronic device (10) as claimed in claim 1, wherein:
when the power controller (130) receives and supplies the external voltage (EV) with the source of the mobile power supply device to the system unit (110), the power controller (130) further detects a remaining power of the internal power supplying unit (120), and when the remaining power of the internal power supplying unit (120) is higher than a power threshold, the power controller (130) continually supplies the external voltage (EV) to the system unit (110) until the external voltage (EV) is lower than a first voltage threshold.

4. The electronic device (10) as claimed in claim 3, wherein:
when the external voltage (EV) supplied by the mobile power supply device is lower than the first voltage threshold, the power controller (130) cuts off supply of the external voltage (EV), and
the internal power supplying unit (120) supplies the system voltage (SV) to the system unit (110) until an operating system operated by the system unit (110) enters a hibernation mode.

5. The electronic device (10) as claimed in claim 3, wherein:
when the power controller (130) receives and supplies the external voltage (EV) with the source of the mobile power supply device to the system unit (110), the power controller further detects a remaining power of the internal power supplying unit (120), and when the remaining power of the internal power supplying unit (120) is lower than a power threshold, the power controller (130) continually supplies the external voltage (EV) to the system unit (110) until the external voltage (EV) is lower than a second voltage threshold, wherein the second voltage threshold is higher than the first voltage threshold.

6. The electronic device (10) as claimed in claim 5, wherein:
when the external voltage (EV) supplied by the mobile power supply device is lower than the second voltage threshold, the power controller (130) transmits a control signal (CS) to the system unit (110), so as to control an operating system operated by the system unit (110) to enter a hibernation mode.

7. The electronic device (10) as claimed in claim 5, wherein:
when the power controller (130) receives and supplies the external voltage (EV) with the source of the mobile power supply device to the system unit (110), and the internal power supplying unit (120) is removed, the power controller (130) continually supplies the external voltage (EV) to the system unit (110) until the external voltage (EV) is lower than a second voltage threshold, wherein the second voltage threshold is higher than the first voltage threshold.

8. The electronic device (10) as claimed in claim 7, wherein:
when the external voltage (EV) supplied by the mobile power supply device is lower than the second voltage threshold, and the internal power supplying unit (120) is removed, the power controller (130) transmits a control signal (110) to the system unit, so as to control an operating system operated by the system unit to enter a hibernation mode.

9. The electronic device (10) as claimed in claim 7, wherein the power controller (130) comprises:
a switch (131), coupled between an input point (INP), the system unit (110) and the internal power supplying unit (120), wherein the input point (INP) is used to connect the source of the external voltage (EV); and
a control unit (132), coupled to a control terminal of the switch (131) and the input point (INP), and turning on the switch (131) when detecting that the input point (INP) is connected to the source of the external voltage (EV).

10. A power supplying control method, adapted to an electronic device (10), wherein the electronic device (10) comprises an internal power supplying unit (120) and a system unit (110), wherein the internal power supplying (120) unit supplies a system voltage (SV) to the system unit (110), and the power supplying control method comprising:
receiving (S201) an external voltage (EV) from external of the electronic device (10); the power supplying control method being **characterized in** further comprising:
using (S202) a voltage value of the external voltage (EV) to determine a source of the external voltage (EV) according to a voltage value of the external voltage (EV); and
supplying (S203) the external voltage (EV) to the system unit (110) when the source of the external voltage (EV) is a mobile power supply device, and not to use the external voltage (EV) to charge the internal power supplying unit (120).

11. The power supplying control method as claimed in claim 10, wherein the step of determining (S202) the source of the external voltage (EV) according to the voltage value of the external voltage (EV) comprises:
supplying (S303) the external voltage (EV) to the system unit (110) by the power controller when the source of the external voltage is an alternating current (AC) transformer (S302), and charging (S303) the internal power supplying unit by using the external voltage (EV).

12. The power supplying control method as claimed in claim 10, wherein the step that the power controller (130) receives (S203) and supplies the external voltage (EV) with the source of the mobile power supply device to the system unit (110) comprises:
detecting (S306) a remaining power of the internal power supplying unit (120), wherein when the remaining power of the internal power supplying unit (120) is higher than a power threshold, the power controller (130) continually supplies (S307) the external voltage (EV) to the system unit (110) until the external voltage (EV) is lower than a first voltage threshold.

13. The power supplying control method as claimed in claim 12, wherein when the external voltage (EV) is (S307) lower than the first voltage threshold, the method further comprises:
cutting (S308) off supply of the external voltage (EV), and
supplying (S308) the system voltage (SV) to the system unit (110) by the internal power supplying unit (120) until an operating system operated by the system unit (110) enters a hibernation mode.

14. The power supplying control method as claimed in claim 12, wherein after the step that the detects (S306) the remaining power of the internal power supplying unit (120), the method further comprises:
supplying (S309) the external voltage (EV) to the system unit (110) by the power controller (130) continually until the external voltage (EV) is lower than a second voltage threshold when the remaining power of the internal power supplying unit (120) is lower than a power threshold, wherein the second voltage threshold is higher than the first voltage threshold.

15. The power supplying control method as claimed in claim 14, wherein when the power controller (110) receives and supplies the external voltage (EV) with the source of the mobile power supply device to the system unit (110), and the internal power supplying unit (120) is (S305) removed, the method further comprises:
continually supplying (S311) the external voltage (EV) to the system unit (110) until the external voltage (EV) is lower than a second voltage threshold, wherein the second voltage threshold is higher than the first voltage threshold.

## Patentansprüche

1. Elektronische Vorrichtung (10), umfassend:
eine Systemeinheit (110);
eine interne Stromversorgungseinheit (120), die mit der Systemeinheit (110) gekoppelt ist und die Systemeinheit (110) mit einer Systemspannung (SV) versorgt; und
eine Stromsteuerung (130), die mit der Systemeinheit (110) und der internen Stromversorgungseinheit (120) gekoppelt ist, eine externe Spannung (EV) von außerhalb der elektronischen Vorrichtung (10) empfangend, wobei die elektronische Vorrichtung (10) **dadurch gekennzeichnet ist, dass** die Stromsteuerung (130) einen Spannungswert der externen Spannung (EV) verwendet, um eine Quelle der externen Spannung (EV) zu bestimmen,
wobei, wenn die Stromsteuerung (130) bestimmt, dass die Quelle der externen Spannung (EV) eine mobile Stromversorgungsvorrichtung ist, die Stromsteuerung (130) die Systemeinheit (110) mit der externen Spannung (EV) versorgt und nicht die interne Stromversorgungseinheit (120) mit der externen Spannung (EV) lädt.

2. Elektronische Vorrichtung (10) gemäß Anspruch 1, wobei:
wenn die Stromsteuerung (130) bestimmt, dass die Quelle der externen Spannung (EV) ein Wechselspannungstransformator ist, die Stromsteuerung (130) die Systemeinheit (110) mit der externen Spannung (EV) versorgt und die interne Stromversorgungseinheit (120) unter Verwendung der externen Spannung (EV) lädt.

3. Elektronische Vorrichtung (10) gemäß Anspruch 1, wobei:
wenn die Stromsteuerung (130) die externe Spannung (EV) von der mobilen Stromversorgungsvorrichtung als Quelle empfängt und die Systemeinheit (110) mit der externen Spannung versorgt, die Stromsteuerung (130) weiterhin einen verbleibenden Strom der internen Stromversorgungseinheit (120) erfasst und wenn der verbleibende Strom der internen Stromversorgungseinheit (120) größer ist als ein Stromschwellenwert, die Stromsteuerung (130) die Systemeinheit (110) kontinuierlich mit der externen Spannung (EV) versorgt bis die externe Spannung (EV) geringer ist als ein erster Spannungsschwellenwert.

4. Elektronische Vorrichtung (10) gemäß Anspruch 3, wobei:
wenn die externe Spannung (EV), die durch die mobile Stromversorgungsvorrichtung geliefert wird, geringer ist als der erste Spannungsschwellenwert, die Stromsteuerung (130) die Versorgung der externen Spannung (EV) trennt, und
die interne Stromversorgungseinheit (120) die Systemeinheit (110) mit der Systemspannung (SV) versorgt, bis ein Betriebssystem, das durch die Systemeinheit (110) betrieben wird, in einen Ruhezustandsmodus eintritt.

5. Elektronische Vorrichtung (10) gemäß Anspruch 3, wobei:
wenn die Stromsteuerung (130) die externe Spannung (EV) von der mobilen Stromversorgungsvorrichtung als Quelle empfängt und die Systemeinheit (110) mit der externen Spannung (EV) versorgt, die Stromsteuerung (130) weiterhin einen verbleibenden Strom der internen Stromversorgungseinheit (120) erfasst und wenn der verbleibende Strom der internen Stromversorgungseinheit (120) geringer ist als ein Stromschwellenwert, die Stromsteuerung (130) die Systemeinheit (110) kontinuierlich mit der externen Spannung (EV) versorgt bis die externe Spannung (EV) geringer ist als ein zweiter Spannungsschwellenwert, wobei der zweite Spannungsschwellenwert höher ist als der erste Spannungsschwellenwert.

6. Elektronische Vorrichtung (10) gemäß Anspruch 5, wobei:
wenn die externe Spannung (EV), die durch die mobile Stromversorgungsvorrichtung geliefert wird, geringer ist als der zweite Spannungsschwellenwert, die Stromsteuerung (130) ein Steuerungssignal (CS) an die Systemeinheit (110) überträgt, um so ein Betriebssystem, das durch die Systemeinheit (110) betrieben wird, so zu steuern, dass es in einen Ruhezustandsmodus eintritt.

7. Elektronische Vorrichtung (10) gemäß Anspruch 5, wobei:
wenn die Stromsteuerung (130) die externe Spannung (EV) von der mobilen Stromversorgungsvorrichtung als Quelle empfängt und die Systemeinheit (110) mit der externen Spannung (EV) versorgt, und die interne Stromversorgungseinheit (120) entfernt wird, die Stromsteuerung (130) die Systemeinheit (110) kontinuierlich mit der externen Spannung (EV) versorgt bis die externe Spannung (EV) geringer ist als ein zweiter Spannungsschwellenwert, wobei der zweite Spannungsschwellenwert höher ist als der erste Spannungsschwellenwert.

8. Elektronische Vorrichtung (10) gemäß Anspruch 7, wobei:
wenn die externe Spannung (EV), die durch die mobile Stromversorgungsvorrichtung geliefert wird, geringer ist als der zweite Spannungsschwellenwert und die interne Stromversorgungseinheit (120) entfernt wird, die Stromsteuerung (130) ein Steuerungssignal (110) an die Systemeinheit überträgt, um so ein Betriebssystem, das durch die Systemeinheit (110) betrieben wird, so zu steuern, dass es in einen Ruhezustandsmodus eintritt.

9. Elektronische Vorrichtung (10) gemäß Anspruch 7, wobei die Stromsteuerung (130) umfasst:
einen Schalter (131), der zwischen einem Eingabepunkt (INP), der Systemeinheit (110) und der internen Stromversorgungseinheit (120) gekoppelt ist, wobei der Eingabepunkt (INP) verwendet wird, um die Quelle der externen Spannung (EV) anzuschließen; und
eine Steuerungseinheit (132), die mit einem Steuerungsanschluss des Schalters (131) und dem Eingabepunkt (INP) gekoppelt ist und den Schalter (131) einschaltet, wenn erfasst wird, dass der Eingabepunkt (INP) mit der Quelle der externen Spannung (EV) verbunden ist.

10. Stromversorgungssteuerungsverfahren, angepasst für eine elektronische Vorrichtung (10), wobei die elektronische Vorrichtung (10) eine interne Stromversorgungseinheit (120) und eine Systemeinheit (110) umfasst, wobei die interne Stromversorgungseinheit (120) die Systemeinheit (110) mit einer Systemspannung (SV) versorgt und das Stromversorgungssteuerungsverfahren umfasst:
Empfangen (S201) einer externen Spannung (EV) von außerhalb der elektronischen Vorrichtung (10), wobei das Stromversorgungssteuerungsverfahren **dadurch gekennzeichnet ist, dass** es weiterhin umfasst:
Verwenden (S202) eines Spannungswerts der externen Spannung (EV), um eine Quelle der externen Spannung (EV) gemäß einem Spannungswert der externen Spannung (EV) zu bestimmen; und
Versorgen der Systemeinheit (110) mit der externen Spannung (EV), wenn die Quelle der externen Spannung (EV) eine mobile Stromversorgungsvorrichtung ist, und nicht Verwenden der externen Spannung (EV), um die interne Stromversorgungseinheit (120) zu laden.

11. Stromversorgungssteuerungsverfahren gemäß Anspruch 10, wobei der Schritt des Bestimmens (S202) der Quelle der externen Spannung (EV) gemäß dem Spannungswert der externen Spannung (EV) umfasst:
Versorgen (S303) der Systemeinheit (110) mit der externen Spannung (EV) durch die Stromsteuerung, wenn die Quelle der externen Spannung ein Wechselspannungs(AC)-Transformator ist (S302), und Laden (S303) der internen Stromversorgungseinheit unter Verwendung der externen Spannung (EV).

12. Stromversorgungssteuerungsverfahren gemäß Anspruch 10, wobei der Schritt, dass die Stromsteuerung (130) die externe Spannung (EV) von der mobilen Stromversorgungsvorrichtung als Quelle empfängt (S203) und die Systemeinheit (110) mit der externen Spannung (EV) versorgt, umfasst:
Erfassen (S306) eines verbleibenden Stroms der internen Stromversorgungseinheit (120), wobei wenn der verbleibende Strom der internen Stromversorgungseinheit (120) größer ist als ein Stromschwellenwert, die Stromsteuerung (130) die Systemeinheit (110) kontinuierlich mit der externen Spannung (EV) versorgt (S307) bis die externe Spannung (EV) geringer ist als ein erster Spannungsschwellenwert.

13. Stromversorgungssteuerungsverfahren gemäß Anspruch 12, wobei, wenn die externe Spannung (EV) geringer ist (S307) als der erster Spannungsschwellenwert, das Verfahren weiterhin umfasst:
Trennen (S308) der Versorgung der externen Spannung (EV), und
Versorgen (S308) der Systemeinheit (110) mit der Systemspannung (SV) durch die interne Stromversorgungseinheit (120) bis ein Betriebssystem, das durch die Systemeinheit (110) betrieben wird, in einen Ruhezustandsmodus eintritt.

14. Stromversorgungssteuerungsverfahren gemäß Anspruch 12, wobei das Verfahren nach dem Schritt des Erfassens (S306) des verbleibenden Stroms der internen Stromversorgungseinheit (120) weiterhin umfasst:
kontinuierlich Versorgen (S309) der Systemeinheit (110) mit der Systemspannung (SV) durch die Stromsteuerung (130) bis die externe Spannung (EV) geringer ist als ein zweiter Spannungsschwellenwert, wenn der verbleibende Strom der internen Stromversorgungseinheit (120) geringer ist als ein Stromschwellenwert, wobei der zweite Spannungsschwellenwert höher ist als der erste Spannungsschwellenwert.

15. Stromversorgungssteuerungsverfahren gemäß Anspruch 14, wobei, wenn die Stromsteuerung (110) die externe Spannung (EV) von der mobilen Stromversorgungsvorrichtung als Quelle empfängt und die Systemeinheit (110) mit der externen Spannung (EV) versorgt und die interne Stromversorgungseinheit (120) entfernt wird (S305), das Verfahren weiterhin umfasst:
kontinuierlich Versorgen (S311) der Systemeinheit (110) mit der externen Spannung (EV) bis die externe Spannung (EV) geringer ist als ein zweiter Spannungsschwellenwert, wobei der zweite Spannungsschwellenwert höher ist als der erste Spannungsschwellenwert.

## Revendications

1. Dispositif électronique (10), comprenant :
une unité de système (110) ;
une unité d'alimentation électrique interne (120), couplée à l'unité de système (110) et alimentant une tension de système (SV) dans l'unité de système (110) ; et
un contrôleur de puissance (130) couplé à l'unité de système (110) et l'unité d'alimentation électrique interne (120), recevant une tension externe (EV) provenant du dispositif électronique (10), le dispositif électronique (10) étant **caractérisé en ce que** le contrôleur de puissance (130) utilise une valeur de tension de la tension externe (EV) pour déterminer une source de la tension externe (EV),
dans lequel lorsque le contrôleur de puissance (130) détermine que la source de la tension externe (EV) est un dispositif d'alimentation électrique mobile, le contrôleur de puissance (130) alimenter la tension externe (EV) dans l'unité de système (110) et ne charge pas l'unité d'alimentation électrique interne (120) avec la tension externe (EV).

2. Dispositif électronique (10) selon la revendication 1, dans lequel :
lorsque le contrôleur de puissance (130) détermine que la source de la tension externe (EV) est un transformateur à courant alternatif (AC), le contrôleur de puissance (130) alimente la tension externe (EV) dans l'unité de système (110) et charge l'unité d'alimentation électrique interne (120) en utilisant la tension externe (EV).

3. Dispositif électrique (10) selon la revendication 1, dans lequel :
lorsque le contrôleur de puissance (130) reçoit et alimente la tension externe (EV) avec la source du dispositif d'alimentation électrique mobile dans l'unité de système (110), le contrôleur de puissance (130) détecte en outre une puissance restante de l'unité d'alimentation électrique interne (120) et lorsque la puissance restante de l'unité d'alimentation interne (120) est supérieure à un seuil de puissance, le contrôleur de puissance (130) alimente en continu la tension externe (EV) dans l'unité de système (110) jusqu'à ce que la tension externe (EV) soi inférieure à un premier seuil de tension.

4. Dispositif électronique (10) selon la revendication 3, dans lequel :
lorsque la tension externe (EV) alimentée dans le dispositif d'alimentation électrique mobile est inférieure au premier seuil de tension, le contrôleur de puissance (130) coupe la fourniture de la tension externe (EV), et
l'unité d'alimentation électrique interne (120) alimente la tension de système (SV) dans l'unité de système (110) jusqu'à ce qu'un système d'exploitation opéré par l'unité de système (110) entre en mode d'hibernation.

5. Dispositif électronique (10) selon la revendication 3, dans lequel :
lorsque le contrôleur de puissance (130) reçoit et alimente la tension externe (EV) avec la source du dispositif d'alimentation électrique mobile dans l'unité de système (110), le contrôleur de puissance détecte en outre une puissance restante de l'unité d'alimentation électrique interne (120) et lorsque la puissance restante de l'unité d'alimentation électrique interne (120) est inférieure à un seuil de puissance, le contrôleur de puissance (130) alimente en continu la tension externe (EV) dans l'unité de système (110) jusqu'à ce que la tension externe (EV) est inférieure à un second seuil de tension, dans lequel le second seuil de tension est supérieur au premier seuil de tension.

6. Dispositif électronique (10) selon la revendication 5, dans lequel :
lorsque la tension externe (EV) fournie par le dispositif d'alimentation électrique mobile est inférieure au second seuil de tension, le contrôleur de puissance (130) émet un signal de commande (CS) vers l'unité de système (110), de manière à commander un système d'exploitation opéré par l'unité de système (110) pour entrer en mode d'hibernation.

7. Dispositif électronique (10) selon la revendication 5, dans lequel :
lorsque le contrôleur de puissance (130) reçoit et alimente la tension externe (EV) avec la source du dispositif d'alimentation électronique mobile dans l'unité de système (110) et l'unité d'alimentation électrique interne (120) est supprimée, le contrôleur de puissance (130) alimente en continu la tension externe (EV) à l'unité de système (110) jusqu'à ce que la tension externe (EV) soit inférieure à un second seuil de tension, dans lequel le second seuil de tension est supérieur à un premier seuil de tension.

8. Dispositif électronique (10) selon la revendication 7, dans lequel :
lorsque la tension externe (EV) fournie par le dispositif d'alimentation électrique mobile est inférieure au second seuil de tension et l'unité d'alimentation électrique interne (120) est supprimée, le contrôleur de puissance (130) émet un signal de commande (110) vers l'unité de système, de manière à commander un système d'exploitation opéré par l'unité de système pour entrer en mode d'hibernation.

9. Dispositif électronique (10) selon la revendication 7, dans lequel le contrôleur de puissance (130) comprend :
un commutateur (131), couplé entre un point d'entrée (INP), l'unité de système (110) et l'unité d'alimentation électrique interne (120), dans lequel le point d'entrée (INP) est utilisée pour connecter la source de la tension externe (EV) ; et
une unité de commande (132), couplé à une borne de commande du commutateur (131) et au point d'entrée (INP), et mettre sous tension le commutateur (131) lors de la détection que le point d'entrée (INP) est connecté à la source de tension externe (EV).

10. Procédé de commande d'alimentation électrique, adapté à un dispositif électronique (10), dans lequel le dispositif électronique (10) comprend une unité d'alimentation électrique interne (120) et une unité de système (110), dans lequel l'unité d'alimentation électrique interne (120) alimente une tension de système (SV) dans l'unité de système (110), et le procédé de commande d'alimentation électrique comprend de :
recevoir (S201) une tension externe (EV) de l'extérieur du dispositif électronique (10) ; le procédé de commande d'alimentation électrique étant **caractérisé en ce qu'**il comprend en outre de :
utiliser (S202) une valeur de tension de la tension externe (EV) pour déterminer une source de la tension externe (EV) selon une valeur de tension de la tension externe (EV) ; et
alimenter (S203) la tension externe (EV) dans l'unité de système (110) lorsque la source de la tension externe (EV) est un dispositif d'alimentation électrique mobile et ne pas utiliser la tension externe (EV) pour charger l'unité d'alimentation électrique interne (120).

11. Procédé de commande d'alimentation électrique selon la revendication 10, dans lequel l'étape de détermination (S202) de la source de la tension externe (EV) selon la valeur de tension de la tension externe (EV) comprend de :
alimenter (S303) la tension externe (EV) dans l'unité de système (110) par le contrôleur de puissance lorsque la source de la tension externe est un transformateur (S302) à courant alternatif (AC) et charger (S303) l'unité d'alimentation électrique interne en utilisant la tension externe (EV).

12. Procédé de commande d'alimentation électrique selon la revendication 10, dans lequel l'étape où le contrôleur de puissance (130) reçoit (S203) et alimente la tension externe (EV) avec la source du dispositif d'alimentation électrique mobile dans l'unité de système (110) comprend de :
détecter (S306) une puissance restante de l'unité d'alimentation électrique interne (120), dans lequel lorsque la puissance restante de l'unité d'alimentation électrique interne (120) est supérieure à un seuil de puissance, le contrôleur de puissance (130) alimente en continu (S307) la tension externe (EV) dans l'unité de système (110) jusqu'à ce que la tension externe (EV) soit inférieure à un premier seuil de tension.

13. Procédé de commande d'alimentation électrique selon la revendication 12, dans lequel lorsque la tension externe (EV) est (S307) inférieure au premier seuil de tension, le procédé comprend en outre de :
couper (S308) l'alimentation de la tension externe (EV), et
alimenter (S308) la tension de système (SV) dans l'unité de système (110) par l'unité d'alimentation électrique interne (120) jusqu'à ce qu'un système d'exploitation opéré par l'unité de système (110) entre en mode d'hivernation.

14. Procédé de commande d'alimentation électrique selon la revendication 12, dans lequel après l'étape de détection (S306) de la puissance restante de l'unité d'alimentation électrique interne (120), le procédé comprend en outre :
alimenter (S309) la tension externe (EV) dans l'unité de système (110) par le contrôleur de puissance (130) en continu jusqu'à ce que la tension externe (EV) soit inférieure à un second seuil de tension lorsque la puissance restante de l'unité d'alimentation de puissance interne (120) est inférieure à un seuil de puissance, dans lequel le second seuil de puissance est supérieur au premier seuil de puissance.

15. Procédé de commande d'alimentation électrique selon la revendication 14, dans lequel lorsque le contrôleur de puissance (110) reçoit et alimente la tension externe (EV) avec la source du dispositif d'alimentation électrique mobile dans l'unité de système (110) et l'unité d'alimentation électrique interne (120) est (S305) supprimée, le procédé comprend en outre :
alimenter en continu (S311) la tension externe (EV) dans l'unité de système (110) jusqu'à la tension externe (EV) est inférieure à un second seuil de tension, dans lequel le second seuil de tension est supérieur au premier seuil de tension.
